# EUROPEAN PATENT SPECIFICATION

(11) **EP 2 326 888 B1**
(45) Date of publication and mention of the grant of the patent: **31.10.2012**
(21) Application number: 08807772.2
(22) Date of filing: 23.09.2008
(51) Int. Cl.: F24J 2/05, F24J 2/14

(54) **SOLAR TROUGH FIELD SYSTEM**
SOLARRINNENFELDSYSTEM
SYSTÈME DE MIROIRS CYLINDRO-PARABOLIQUES DE CHAMP

(43) Date of publication of application: 01.06.2011
(73) Proprietor: Çapan, Rahmi Oguz, 48700 Marmaris (TR)
(72) Inventor: Çapan, Rahmi Oguz, 48700 Marmaris (TR)
(74) Representative: Cayli, Hülya
(86) International application number: PCT/IB2008/053868
(87) International publication number: WO 2010/035064

(56) References cited:
- EP-A- 1 787 067
- WO-A-98/38457
- WO-A-2007/110713
- DE-A1- 3 933 733
- DE-A1- 10 036 746
- GB-A- 1 508 199
- JP-A- 58 168 846
- JP-A- 2000 208 802
- US-A- 4 781 173
- US-A1- 2004 050 381

## Description

### Technical Field

This invention relates to developments on parabolic trough-shaped collectors which concentrate the sunlight on an axis of focus, converting it into other energy forms such as heat and electricity.

### Prior Art

Currently, trough collectors (solar trough field system) are used to collect the sun's energy in order to obtain electricity and heat there from. These systems comprise trough-shaped long parabolic reflectors, thermal receiver tubes which are placed on the focus of the reflectors where beams coming from the reflector are collected and in which a fluid exists, and a rotating mechanism which aligns the reflectors to the sun. The beams coming to the reflectors which are directed towards the sun are reflected and collected on the thermal receiver tube which is located on the focus of the reflector. Thermal receiver tube is provided with two nested tubes where a vacuum setting is located in the space there between. A fluid, which provides the heat transfer, is passed through the inner tube. The outer tube is made of glass. By concentrating the beams coming from the reflectors on the thermal receiver tube, this tube reaches very high temperatures; therefore, the fluid located in the inner tube can be heated. Heat energy can be converted into the electric energy, when desired, by means of this fluid which reaches high temperatures.

The existing Solar through Field type of Thermal Energy technologies have some design problems which cause thermodynamic efficiency losses and increase fabrication, installation, operation and maintenance costs. These design problems are:

By its nature, a reflective parabola must receive solar incidence at a perpendicular angle to it's aperture in order to be able to concentrate it to its focal point. Since the radius of the heat receiving pipe (around 8cm) located at the focal point of the parabola is relatively small to the aperture of the Parabola itself (about 570cm), even small shifts from this perpendicular position causes the quality of the concentration to drop and eventually miss the heat receiving pipe. Therefore, it is required that the "parabolic trough" accurately follow the Sun all day long at a speed equal to the rotation of the Earth (0.004 Degree/Sec. or 0.25 Degree/Min.).

All of the current designs are based on placing the centre of rotation at the gravitational centre of the total weight of all of the rotating parts. This is done to reduce the amount of energy required for rotation.

However Since the "centre of rotation" and the "focal point" (B) of the Parabola are not superimposed in these systems, as shown in Figure-1, the heat receiving pipe has to be rotated all day long to keep it at the focal point of the Parabola (B) which is continuously moving. This in turn requires that the end connection pipes that connect the moving heat receiving pipe to the stationary steam pipeline on the ground must be flexible.

The solar trough field systems which are built on California (USA) by LUZ can be given as an example for these systems. In that system of LUZ, the parabolic reflectors which are many meters long and the thermal receiver tubes which are located on their focus are rotated together. The most fundamental problem of this system is that the thermal receiver tubes which are made of a fragile material are movable. As long as the thermal receiver tubes are movable, they are subjected to more torque load and the flexible hoses are used in the connections of the beginning and ending points of the parabolic reflectors with the fixed tubes. The thermal receiver tubes which are subjected to the torque loads have a higher possibility of breaking. On the other hand, it is understood that the flexible hose connection is not a safe system since the temperature of the fluid which is transferred within the thermal receiver tube is 300-500°C. In addition, it has been obtained from the field observations that the truss structure, which supports the parabolic mirrors, is also weak against the torque and the moment loads acting due to the drive unit of the system and the wind. Because of these loads, the parabolic reflectors are frequently broken, thus causing the operating costs to increase.

Thus, after some trials they had to switch from "Direct Steam Generation" (DSG) to using oil as the "heat transfer fluid". Even though hot oil does not have the dynamics of the steam, these hoses still burst occasionally, spilling oil all over the mirror lined parabolic troughs. Hot oil is than pumped to the central station where it is passed true heat exchangers to generate steam from water tanks. However this two stage operation results in thermodynamic losses up to 15%.

Due to the problems encountered in the above-mentioned system of LUZ, the EUROTROUGH project supported by the European Union is initiated. In the scope of this project, the lower part of the parabolic reflectors is supported by a truss structure which can resist more against the torque and the moment loads, and there are inflexible movable tubes attached to the rotary joints on the connection points of the movable thermal receiver tubes with the fixed tubes. Although the truss system which is developed with EUROTROUGH is safer than the system of LUZ, it could not completely eliminate the breaking problem of the thermal receiver tubes It has been understood from the field observations that the possibility of breaking the thermal receiver tubes decreases only to some extent since they are movable in this system as well. In addition, it has been also revealed from the field observations that the hot fluid frequently leaks out from these connections of the thermal receiver tubes comprising rotary joint connection points.

Another design problem existing in current technologies can be seen from Figure-2, which shows the connection between the glass tube (102) and the metal heat receiving pipe (103). In current technologies glass tube (102) is connected to the metal heat receiving pipe (103) from both ends by a metal expansion unit (101). These metal parts are connected to the glass tubes (102) by a special laser welding technique. Vacuum is formed in the annulus of the metal pipe (103) and the glass tube (102) during welding process. Then these units are welded together to form the full length of the Heat Receiving Element. However;
- When the water reaches above 300 °C temperatures, some Hydrogen breaks out of water and passes through the steal pipe into the vacuum zone. Since there is atmospheric pressure outside, this Hydrogen remains in the vacuumed annulus and causes the vacuum to drop gradually. To prevent this, a special metal rod called "getter" is developed and placed inside the glass tube. However "getter" has a certain capacity to absorb Hydrogen. This is one of the important reasons why the current designs had to return back to using oil as heat transfer fluid instead of achieving the much desired Direct Steam Generation.
- The metal expansion parts welded to glass has a very low heat resistance. Thus it gradually weakens the special connection to the glass tube.
- This metal expansion piece inevitably conveys some of the vibration and torque created by the metal parts to the glass tubes, causing them to break.

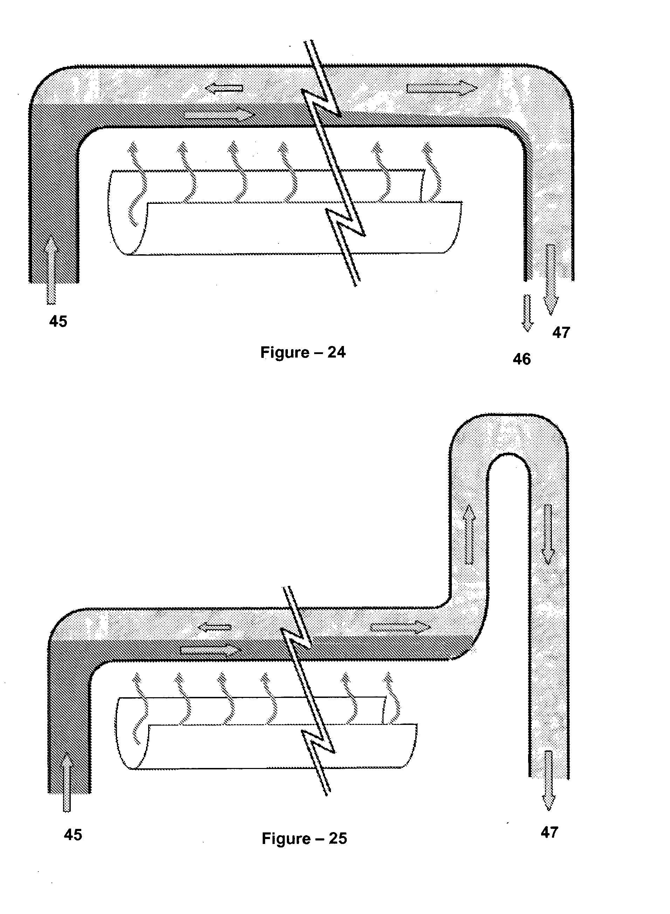

A further design problem exists in high pressure separators (can be seen in figure 24). Since the Heat Receiving Assemblies (Metal pipe, Glass tubes etc.) are placed horizontally, depending on the water inlet flow rate (45), some part of the water (46) through the pipe can not become steam (47). Thus the discharge, especially from the first several units, contains hot water (46) as well as steam (47). This also prevents the steam (47) from being a dry steam which is necessary for steam turbines. To deal with this, the systems in the prior art use high pressure separators at the discharge of the first few parabolic trough units. Water separated by this separator is piped back to the inlet stream, recirculating it until it completely becomes steam. However this increases system inefficiency, as well as adds to the system cost.

The prior art document EP 1787067 discloses a solar trough system in which a corrugated tube, an expansion bellows or a roll membrane is used to compensate the expansion of tubes.

The prior art document WO 98/38457 A discloses an absorption duct in order to prevent liquid pass through the duct but to allow gas transition. Said duct comprises an elevated section in order to prevent the movement of liquid. The system of WO 98/38457 A is useful for static duct systems.

The present invention provides a solar trough field system which overcomes the above mentioned design problems with an increased efficiency and reduced fabrication, installation and maintenance costs.

### Summary of the invention

In accordance with the present invention; which discloses the developments on the solar collectors with parabolic reflector, which rotate around a fixed thermal receiver tube; the solar trough field system comprises;

A "vacuum seal and glass tube connector system" which allows the Heat Receiver pipe to expand and move freely within and independent of the glass tubes, provides a vacuum seal and provides support for the entire Heat Receiver Element;

A "flexible expansion unit" located at the end of each parabolic trough unit, providing the vacuum seal while the Heat Receiving Pipe is freely moving due to heat expansion

A vertical loop located at the discharge side of the parabolic trough unit, which can be used instead of separator at ground level and which simultaneously providing for the heat expansion of the Heat Receiving Pipe.

A wind breaker to surround the Solar Trough Field to deflect the wind above the parabolic troughs.

A half circular support and rotating structure which supports the parabolic reflectors and provides an efficient protection while at the same time allowing for simpler systems to track the Sun.

### Object of the Invention

The object of the present invention is to provide a solar trough field system (with parabolic reflectors rotating around a fixed thermal receiver tube) having a "vacuum seal and glass tube connector system" which allows the heat receiver pipe to expand and move freely within and independent of the glass tubes and provides a vacuum seal and at the same time provides a support for the entire Heat Receiver Element.

Another object of the invention is to use a flexible expansion unit for providing vacuum seal after the last glass tube connector assembly at the discharge side of the parabolic trough, while the Heat Receiving Pipe is moving freely due to heat expansion.

Another object of the invention is to use a vertical loop between successive parabolic troughs (located at the discharge side of the parabolic trough units) to provide the heat expansion factor for the Heat Receiving Pipe and also to prevent the remained water (which has not evaporated) from passing to the next pipe and so it remains in the heat receiving pipe until it becomes steam.

Another object of the invention is to solve the wind load problem and to prevent the mirror breakage problem caused by the wind load, by using a wind breaker to surround the Solar Trough Field to deflect the wind above the parabolic troughs.

Yet another object of the invention is to decrease the maintenance and replacement expenses; which will arise in case of breaking the glass tubes; with the help of the "glass tube connector system".

Another object of the invention is to use "glass tube connection system" to provide a continuous vacuum chamber for the full length of the parabolic trough unit, allowing for the creation and repeated maintenance of the vacuum from a single valve located at either end of the parabolic trough unit, eliminating the need for the currently used "getter" sticks to absorb Hydrogen.

### Brief Description of Figures

The solar trough field system according to the present invention is shown in the attached drawings wherein:

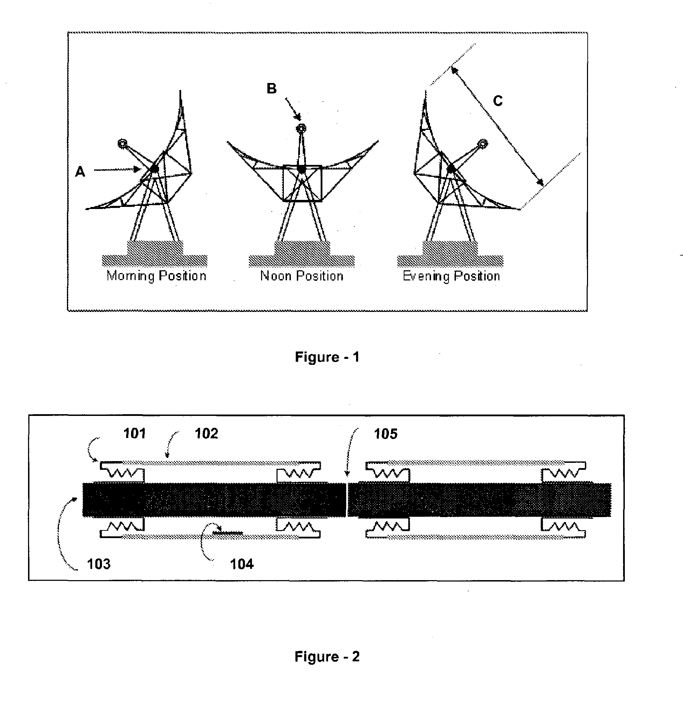

Fig. 1 shows the solar trough field system designs in the prior art.
Fig. 2 shows the glass tube and metal heat receiving pipe connection in the prior art systems.

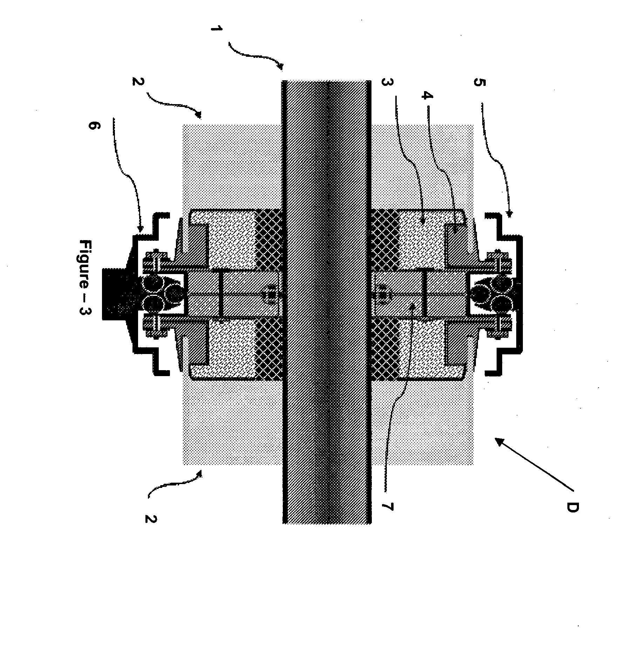

Fig. 3 shows the entire vacuum seal & glass tube connector system
Fig. 4 shows the front and side views of the ceramic unit
Fig. 5 shows the connection of two halves of the ceramic unit.

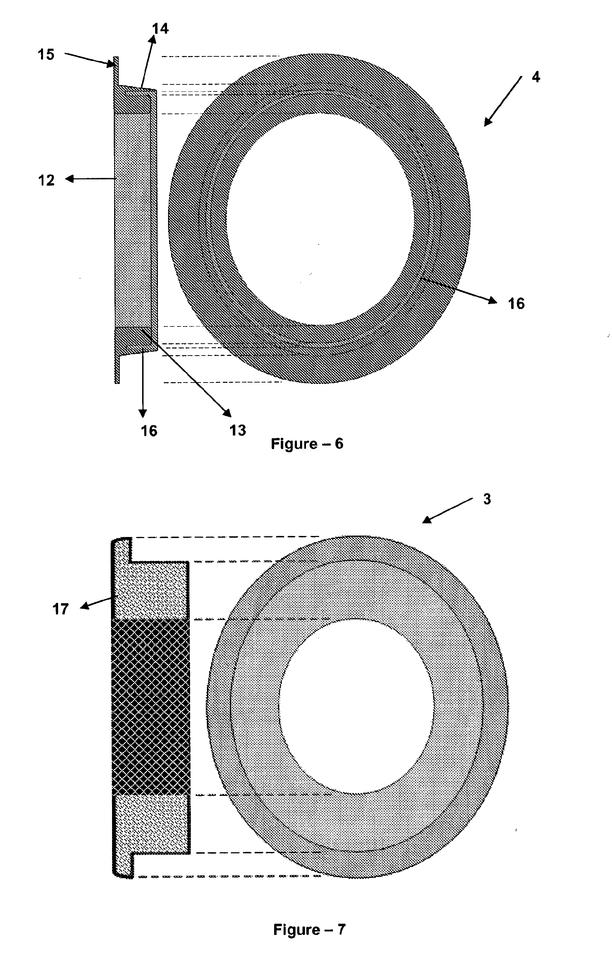

Fig. 6 shows the front and side views of the silicon unit
Fig. 7 shows the front and side views of the heat & UV protection of the silicon unit

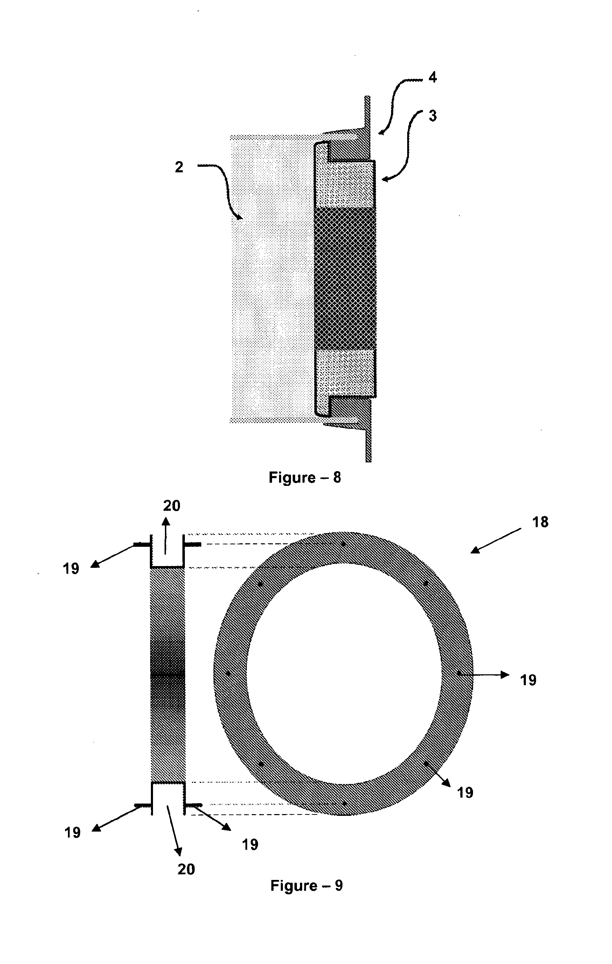

Fig. 8 shows the glass tube and the silicon unit connection
Fig. 9 shows the stationary metal support unit
Fig. 10 shows the rotating support & housing unit
Fig. 11 - Fig. 19 shows the installation steps of the entire glass tube connector system
Fig. 20 shows the flexible expansion unit connection
Fig. 21 shows the connection of the expansion unit to the heat receiving pipe
Fig. 22 shows the flexible expansion unit
Fig. 23 shows the expanded and contracted positions of the expansion unit
Fig. 24 shows the necessity of high pressure separators in prior art systems
Fig. 25 shows the simple vertical loop design

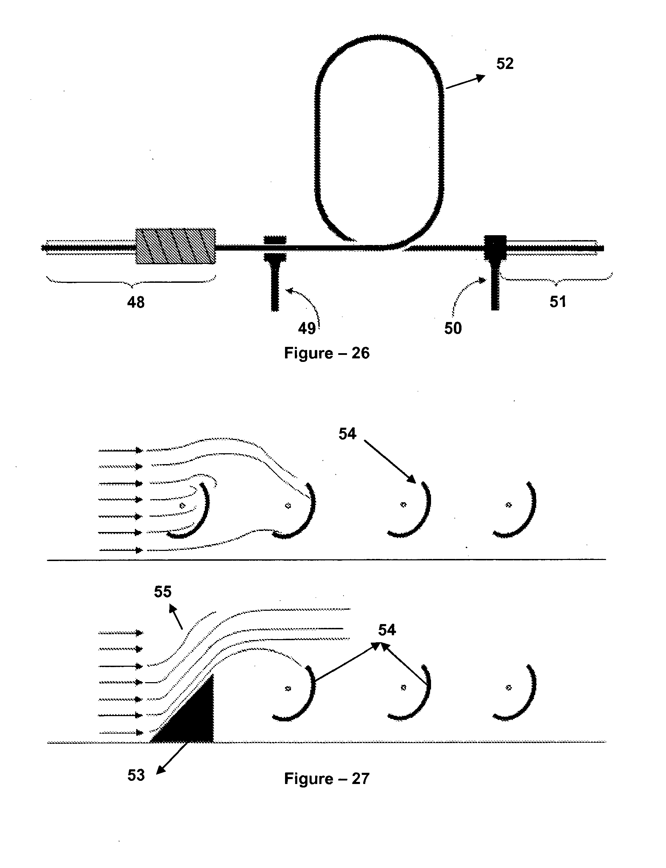

Fig. 26 shows the vertical loop design
Fig. 27 shows the wind breaker
Fig. 28-a shows the losses in the inlet and outlet sides of the heat receiving unit in the prior art systems

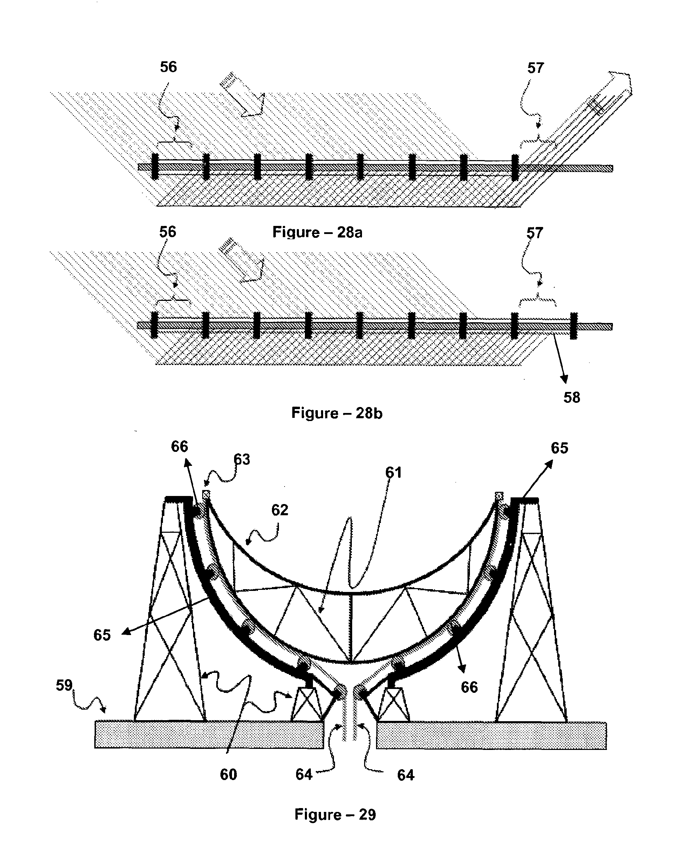

Fig. 28-b shows the additional glass tube at the discharge side
Fig. 29 shows a rotating structure supporting the parabolic mirror panel.

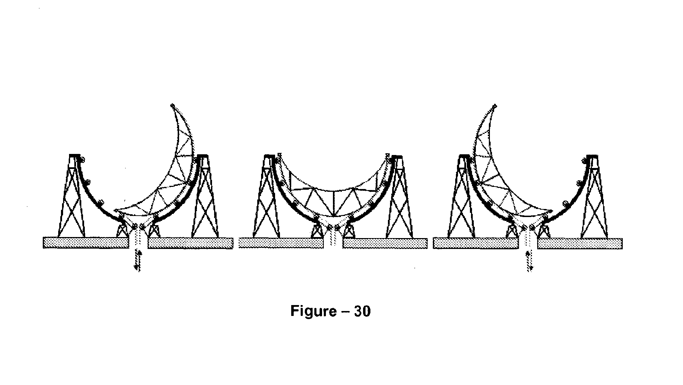

Fig. 30 shows the rotating structure supporting the parabolic mirror panel in different positions.

The parts in the figures are numbered one by one and the corresponding terms of these numbers are given below.
Center of gravity of all rotating parts (A)
Focal point of the parabola (B)
Aperture of the parabola (C)
Metal expansion unit (101)
Glass tube (102)
Heat receiving pipe (103)
Getter (104)
Welding point (105)
Heat receiving pipe (1)
Glass tube (2)
Insulator (3)
Seal (silicon) unit (4)
Top half of the rotating support structure (5)
Bottom half of the rotating support structure (6)
Heat receiver element, HRE (D)
Vacuum seal and glass tube connector system (E)
Ceramic unit (7)
Ceramic unit halves (8)
Ball socket (9)
Bolt (10)
Ball (11)
Silicon unit back face (12)
Silicon unit front face (13)
Outer lip (14)
Flanging part (15)
Groove (16)
Insulator back face (17)
Stationary metal support unit (18)
Bolt (19)
U-ring (20)
Rotating support and housing unit (21)
Hinge (22)
Assembly of balls / wheels (23)
Connector (24)
Vacuum sealing gaskets (25)
Metal ring (26)
Metal ring (27)
Bolt (28)
Flexible expansion unit (29)
Blower (30)
Metal ring (31)
Screwed nipple (32)
Screwed flange (33)
Flexible ring (34)
Silicon ring (35)
Gasket (36)
Metal ring (37)
Bolt (38)
The last glass tube connector assembly (39)
The last Glass Tube, attached to the Flexible Expansion Unit (40)
Connector assembly (41)
Steam pipe anchor (42)
Support leg (43)
Support leg (44)
Inlet flow rate (45)
Hot water (46)
Steam (47)
The last glass tube and expansion unit (48)
Sliding anchor (49)
Fixed anchor (50)
Glass tube of the next parabolic trough (51)
Separator and heat expansion loop (52)
Wind breaker (53)
Parabolic trough (54)
Wind (55)
Inlet side (56)
Outlet side (57)
Additional glass tube (58)
Foundation (59)
Stationary structure (60)
Rotating structure (61)
Parabolic surface covered by mirror (62)
Rope is fixed to the rotating structure (63)
Ropes for system rotation (64)
Half circular stationary structure (65)
Wheels (66)

### Detailed Description of the Invention

A solar trough field system according to the invention comprises multiple parabolic reflectors; a thermal receiver tube, center of which coincides with the focus of the parabolic reflectors and which consists of a metal heat receiving pipe (1) and a glass tube (2) which are nested (the glass tube surrounds the metal heat receiving pipe from outside); a "vacuum seal and glass tube connector system" (E) which connects the glass tubes (2) and the thermal heat receiving pipe (1) to each other; a rotating support unit (21), which connects the parabolic panel to the glass tube connector system (E) and provides the thermal receiver tube (1) to stay stationary while the parabolic panel is rotating around it; "flexible expansion unit" (29) located at the end of each parabolic trough unit which provides vacuum seal while the Heat Receiving Pipe (1) is moving due to heat expansion; and a vertical loop (52) located at the discharge side of the parabolic unit, which can be used instead of water separator and which also provides the heat expansion of the Heat Receiving Pipe (103).

Figure-3 shows the entire "vacuum seal and glass tube connector system" (E) connecting the glass tubes (2) to each other and to the metal heat receiving pipe (1). This system has three functions, these are: to allow the metal heat receiving pipe (1) to expand and move freely within and independent of the glass tubes (2); to provide vacuum seal; and to provide support for the entire Heat Receiver Element (D). The vacuum seal and glass tube connector system (E) also provides a continuous vacuum chamber for the full length of the parabolic trough unit, allowing for the creation and repeated maintenance of the vacuum from a single valve located at either end of the parabolic trough unit, eliminating the need for the currently used "getter" sticks to absorb Hydrogen. This system also decreases the maintenance and replacement expenses; which will arise in case of breaking the glass tubes (2).

The vacuum seal and glass tube connector system (E) comprises a ceramic unit (7) which allows the heat receiving pipe (1) to expand and slide freely over the balls (11) located at the centre of the ceramic unit (7) and provides heat insulation between the heat receiving pipe (1) to be located at it's center and the glass tubes (2); a silicon unit (4) which provides vacuum seal around the glass tube (2) and provides enough flexibility to protect the glass tube (2) from vibrations and bending forces that may occur on the metal parts; a heat and UV protection unit (3) which provides UV light and heat insulation for the silicon unit (4); and a stationary metal support unit (18) to provide the base for all the glass tube connection units.

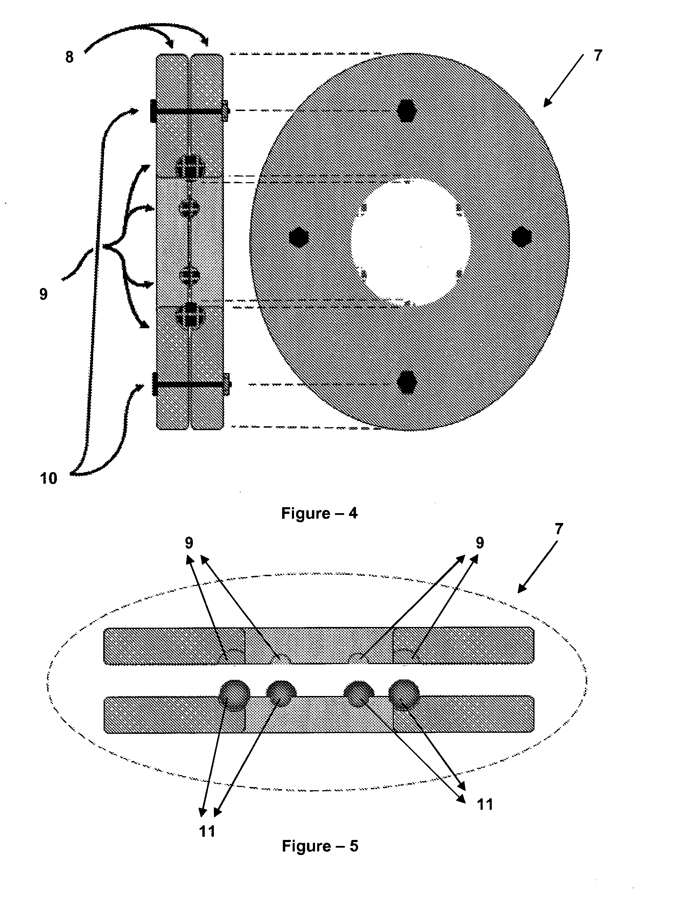

In figures 4 and 5, the ceramic unit (7) is shown in detail. The ceramic unit (7) consists of two hollow cylindrical parts (8). On one side of each half (8), there exits a number of ball sockets (9) (preferably six ball sockets). Six balls (11) are housed in between the two halves (8) of ceramic unit (7), within these ball sockets (9), forming a type of "ball bearing". These two halves (8) of ceramic unit (7) are glued together with heat resistant glue; making sure that the glue does not get close to the balls (11); after the balls (11) are placed in between them (8). In addition to glue, the Ceramic halves (8) are also bolted (10) together for additional strength. The balls (11) are preferably made up of ceramic, but other materials can also be used.

Figure-6 shows the front and side views of the silicon unit (4). The silicon unit (4) is in the shape of a hollow cylinder, wherein the back face (12) of this hollow cylinder extends with a larger diameter and provides a flange like shape (15) and on the front face (13) of the silicon unit (4), there exists a circular groove (16) (the glass tube slides into this groove). The outer lip (14) of the silicon unit (4) is kept thin to increase its flexibility so that as vacuum is applied within the glass tube (2), Atmospheric pressure will cause it to seal on the outside surface of the glass tube (2), providing a strong vacuum seal. The material of this unit needs to be selected to provide good seal on the glass, be flexible under high temperatures and have a long operational life. For this purpose a special silicone material has been selected for the pilot unit, but it may be some other material to meet the same qualifications.

Even special silicon designed for high temperature use, are sensitive to ultraviolet light (UV). Thus it should be shaded from sunlight. This is especially important on the internal surface of the silicon unit where concentrated light might hit it. A flexible Insulator Unit (3) is used to slide in and cover the inner face, which also provides some insulation against radiant heat transfer through the vacuum to the silicon unit (4). The front and side views of the heat and UV protection unit (3) is shown in Figure-7. As can be seen in this figure, the heat and UV protection unit (3) has a hollow cylindrical shape, wherein the back face (17) of this hollow cylinder extends with a larger diameter which also covers the front face (13) of the silicon unit (4) and provides a better insulation. This unit can be produced from any material which does not chemically react when subjected to light and heat, preferably ceramic wool is used.

In Figure-8, the glass tube (2) and the silicon unit (4) connection is shown. The UV insulator (3) is placed in the inner hollow part, and the glass tube (2) is slide into the groove (16) of the silicon unit (4).

Figure-9 shows the side and front views of the stationary metal support unit (18). As can be seen in Figure-9, the base of the metal support unit (18) is a circular ring, with its outer lips forming a cylindrical u-ring (20). Bolts (19) to which gaskets, metal rings and silicon pieces will be fitted are welded to the metal piece to eliminate nuts inside the u-ring (20) where there will be alignment wheels and/or alignment balls.

In Figure-10, the side and front views of the rotating support and housing unit (21) is shown. This unit comprises the assembly of alignment balls (or wheels) (23) which provide multi directional guide for this rotating support (21) and housing unit to glide around the glass tube connection system (E); the hinge (22) to allow the top half of this support unit (21) to open while the glass tubes (2) are installed and with the help of this hinge (22), after the glass tube (2) installation is completed, the top half of this support unit (21) is closed and fixed to the bottom half; a connector (23) to the support leg that is attached to the parabolic trough.

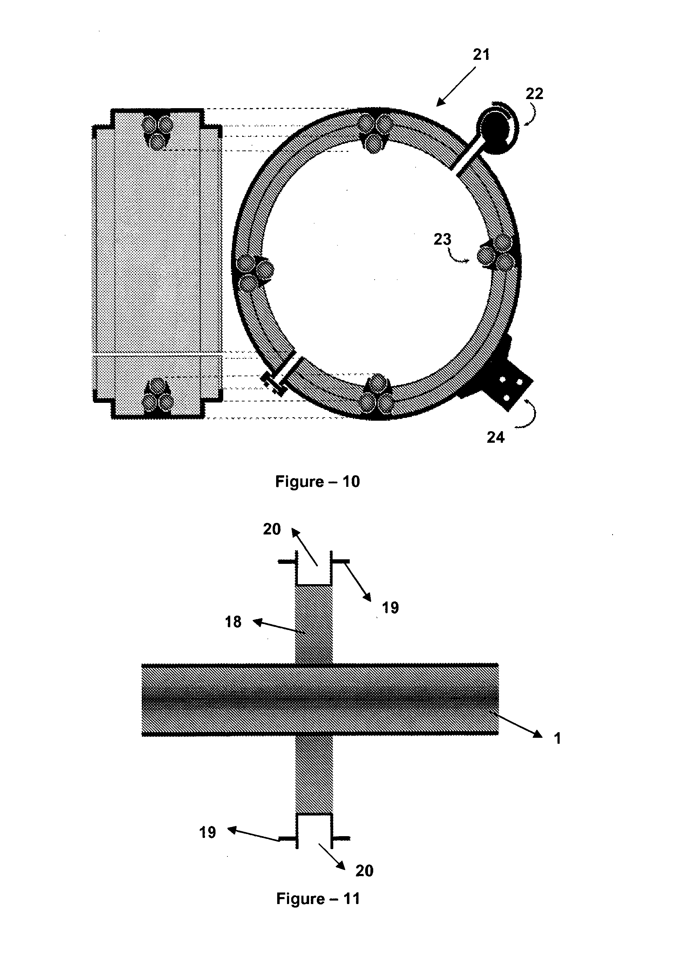

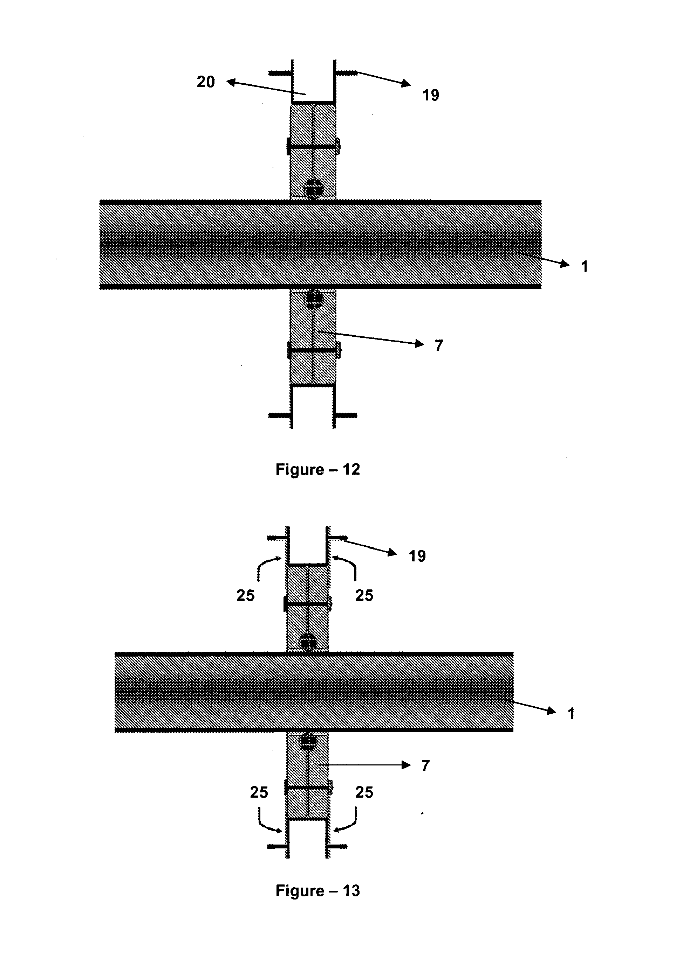

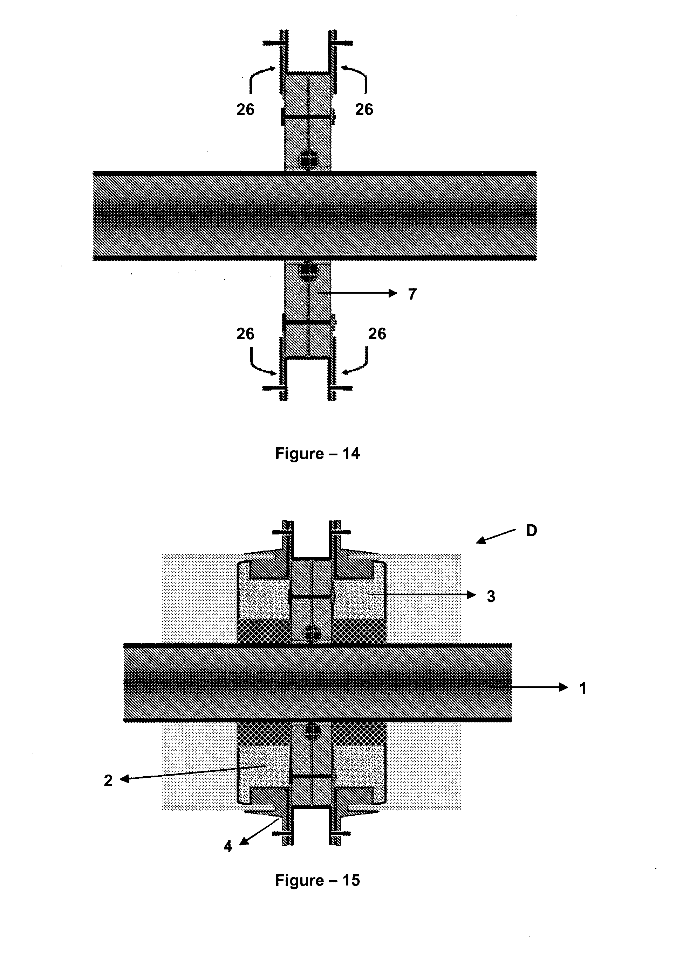

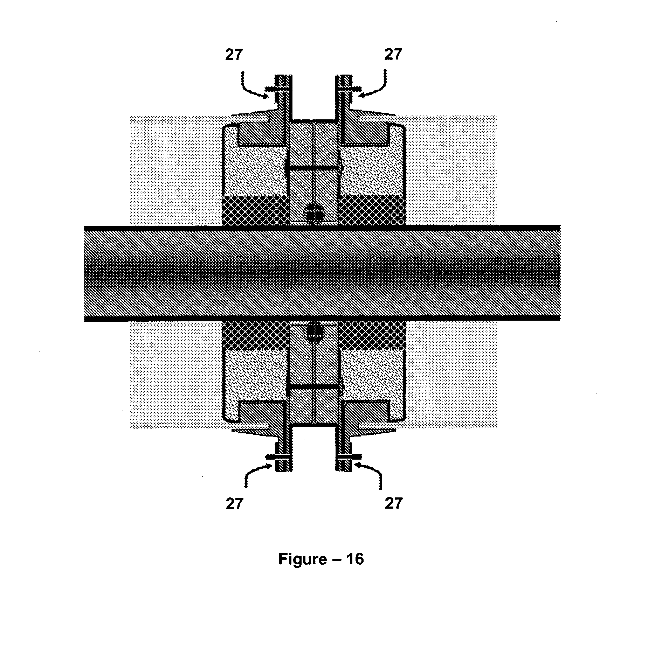

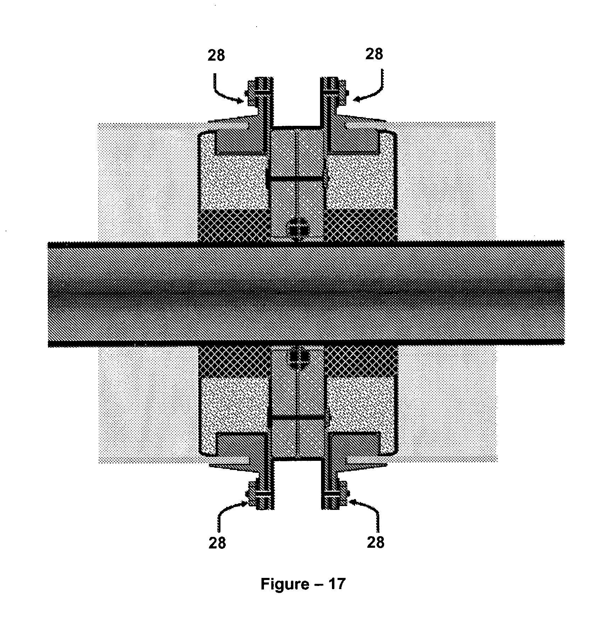

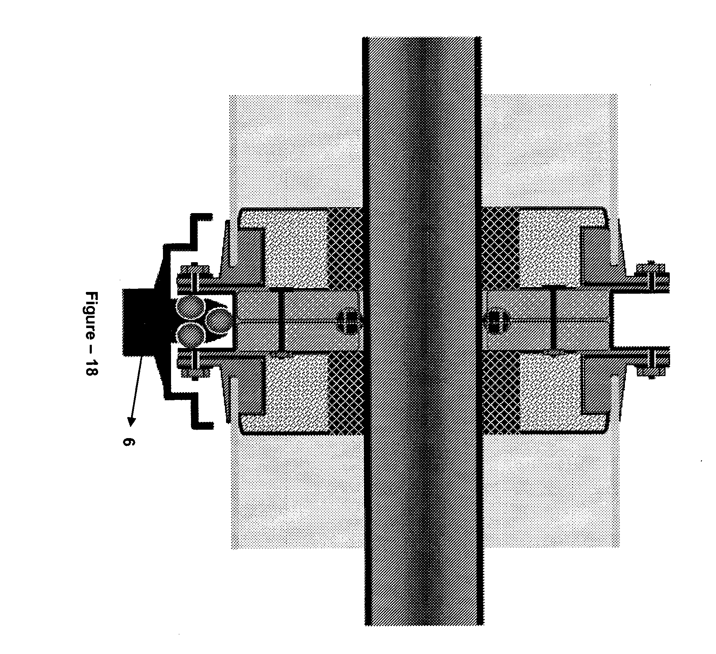

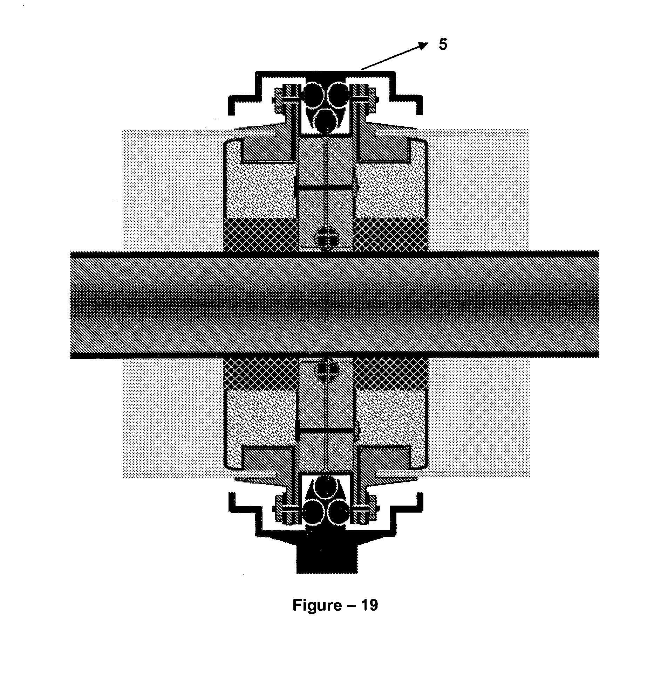

From figure 11 to figure 19, the installation of the entire glass tube connector system (E) is explained. These steps are:
1. Stationary Metal Support Unit (18) is slid on to the Heat Receiving Pipe (can be seen in Figure 11)
2. Ceramic Unit is slid over the Heat Receiving Pipe (1) and fitted within the Stationary Metal Support Unit (18). (Figure 12)
3. Vacuum sealing gaskets (25) are fit on the bolts (19) on both side of the Metal Support Unit (18). (Figure 13)
4. Metal rings (26) are fit on the bolts (19) on both side of the Metal Support Unit (18). The purpose of these rings (26) is; to press on the flexible gasket (25) to provide vacuum seal, and to provide guides to the silicone unit (4) in the centre, preventing it from sliding out of the Metal Support Unit (18). (figure 14)
5. Glass tubes (2) previously fitted into silicone units (4) are slid in to position from both sides. (figure 15)
6. Metal rings (27) are slid on the Silicon to press on it to provide vacuum seal.
   (figure 16)
7. The entire unit is tightened up by the bolts (28). (figure 17)
8. Whole assembly is set on the bottom half (6) of the rotating support and housing unit (21). (figure 18)
9. The top half (5) of the rotating support and housing unit (21) is lowered and tightened up. (figure 19)

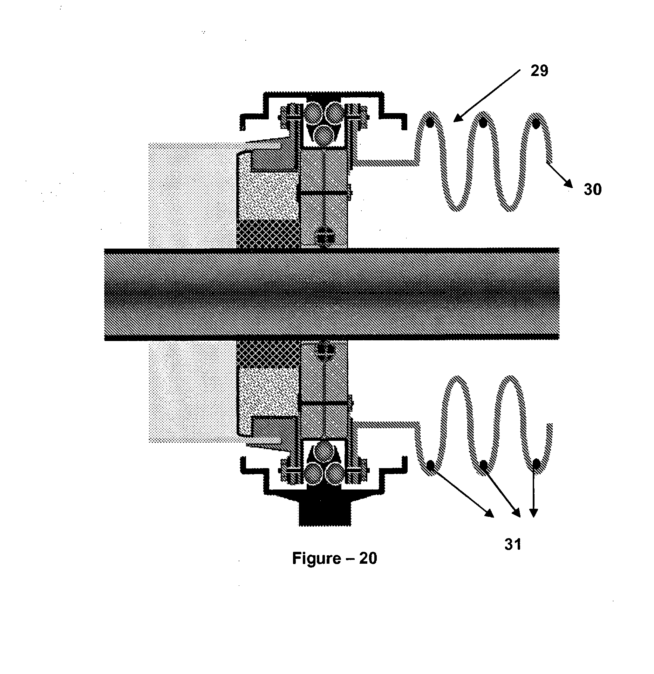

After the last glass tube connector system (E) is placed, the flexible expansion unit (29) is attached to the support unit (18) same as if another glass tube (2) assembly is being fit on (As can be seen from figure 20). (Same gaskets, metal rings, etc.). The purpose of this assembly is to provide vacuum seal while the heat receiving pipe (1) is moving due to heat expansion.

Connection of the expansion unit (29) to the heat receiving pipe (1) can be seen in Figure-21. These connection steps are;
1. Screwed nipples (32) are welded to the pipes (1);
2. Screwed flanges (33) are fitted on to the screwed nipples (32);
3. Flexible rings (34) are trapped in between the inner lips of the flanges (33) and the wall thickness of the screwed nipples. This is to provide additional seal for high pressure steam within the pipe (1);
4. A silicone ring (35) is fitted over the flange (33). The purpose of this silicon piece is to prove heat insulation between all the metal parts and the flexible expansion unit (29);
5. A gasket (36) is used to provide vacuum seal around the bolts (38);
6. Metal rings (37) are used to tighten the flexible gaskets (36);
7. Bolts (38) are tightened to fix the entire assembly;

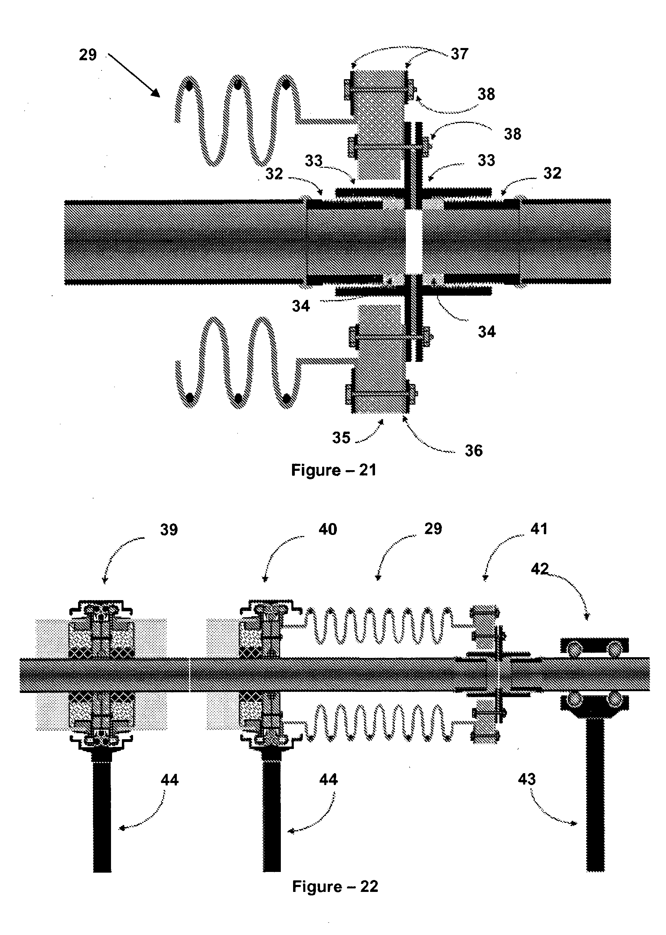

In figure 22, the last glass tube connector assembly (39) at the discharge side of the parabolic trough; the last glass tube attached to the flexible expansion unit (40); the flexible expansion unit (29); the connector assembly (41) fixing the expansion unit (29) to the steam pipe, which is the final vacuum seal point; steam pipe anchor (42) that allows the pipe to slide out as expands while preventing it from moving up and down; support leg (43) to the anchor unit and; support legs (44) attached to the parabolic trough, which units rotate along with the parabolic trough while providing support to the heat receiving assembly that is stationary, can be seen.

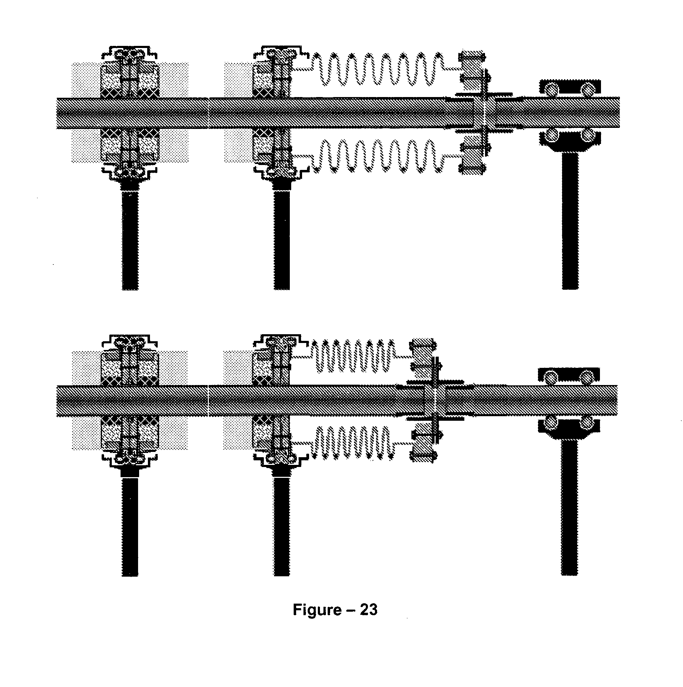

Figure 23 shows the expanded and contracted positions of the expansion unit (29). As can be seen, while the steam pipe expands, there is no movement on the glass tube side.

The solar trough field system according to the present invention includes vertical loops (a simpler design can be seen from Figure-25, the vertical loop can be seen from Figure-26) between successive parabolic troughs connected in series, located at the discharge side of the parabolic trough unit. These vertical loops (52) can be used instead of separators.

Since water is heavier than steam, with the help of the vertical loop almost all of it will remain in the heat receiving pipe (1) until it becomes steam. If the flow rate of the water (45) is too high, some of the water can overflow through the first one or two of the vertical loops between successive parabolic trough units connected in series. However dry steam is achieved after the third or fourth parabolic trough units, eliminating the currently used multitude of separators located on the ground in between parabolic trough units.

The existing designs can not utilize this vertical unit since their Heat Receiving Assembly rotates along with the parabolic trough structure. In other words, as it rotates, it would loose its elevation and let the water flow out. This does not happen in the present invention since the heat receiving assembly is fixed.

As can be seen from Figure-26, the vertical loop design (52) also provides the heat expansion function for the heat receiving pipe. According to this design, after the last glass tube and expansion unit (48) of the previous parabolic trough, the steam pipe passes through the sliding anchor (49) and after forming a vertical loop (52) it reaches the fixed anchor (50) located at the inlet side of the next parabolic trough. By this way, the extension will increase the height or width of the loop, but it will not affect any of the parabolic troughs.

In an embodiment of the present invention, the solar trough field system also includes 2m high wind breaker (53) to surround the solar trough field to deflect the wind (55) above the parabolic troughs (54). Wind loads both with and without this wind breaker (53) is simulated by running FLUENT and NASTRAN programs, and it is seen that with this wind reflector up to 125Km/Hr winds can be reached without serious problems while the current designs have to be shut down at winds reaching about 60Km/Hr. The effect of this wind breaker can simply be seen from Figure-27.

Solar incidence hits the ground at an angle. This angle increases as we move further North or South from the Equator. In existing Solar Trough Field installations the total length of the glass tube (2) and heat receiving pipe (1) assemblies are equal to the length of the Solar Trough (As can be seen from Figure-28a).

This causes two sources of inefficiencies:
a) A significant length of the Heat Receiving Assembly at the inlet side (56) does not receive the concentrated solar light;
b) An additional significant length of the concentrated solar light misses the Heat Receiving Assembly at its discharge side (56).

For this case, in an embodiment of the present invention, an additional glass tube (58) is assembled at the discharge side and the solar energy that is missed in the existing system is recovered. This is possible due to the fact that the Heat Receiving Assembly is stationary in this present invention (see Figure-28b).

Figure-29 and Figure 30 shows another embodiment of the present invention which shows a rotating structure (61) supporting the parabolic mirror panel (62) by pulling the ropes (64). This is just an example of such a support and rotation structure (61). Same can be achieved by many different detail modifications. The important thing here is that the rotating structure is rested on many wheels (66) positioned on a half circular stationary structure (65). These wheels (66) allow easy movement and good resistance to wind loads. These ropes (64) are pulled by a central motor with adjustable speed. The speed is adjusted as required by solar sensors, so that the tracking of the sun is accurate.

The developments in the above preferred solar trough field systems are not intended to limit the protection scope of the invention. According to the information described with the invention, modifications to be performed on the developments in this preferred solar trough field systems should be evaluated within the protection scope of the invention, as defined by the claims.

## Claims

1. A solar trough field system, comprising multiple parabolic reflectors; a thermal receiver tube, center of which coincides with the focus of the parabolic reflectors and which consists of a metal heat receiving pipe (1) and glass tubes (2) which are nested, wherein to allow the metal heat receiving (1) pipe to expand and move freely within and independent of the glass tubes (2), to provide vacuum seal, to provide support for the entire heat receiver element (D), and to provide a continuous vacuum chamber for the full length of the parabolic through unit, a vacuum seal and glass tube connector system (E) connects the glass tubes (2) and the thermal heat receiving pipe (1) to each other; in order to provide the thermal receiver tube (1) to stay stationary while the parabolic panel is rotating around it, a rotating support unit (21) connects the parabolic panel to the glass tube connector system (E); in order to provide vacuum seal while the heat receiving pipe (1) is moving due to heat expansion, flexible expansion units (29) are located at the end of each parabolic trough unit; and in order to prevent the non evaporated remaining water to pass through other collectors and to provide the heat expansion factor for the heat receiving pipe (1), vertical loops (52) are placed between successive parabolic troughs connected in series, located at the discharge side of the parabolic unit wherein,the vacuum seal and glass tube connector system (E) comprises a ceramic unit (7) in order to allow the heat receiving pipe (1) to expand and slide freely over balls (11) located at the centre of the ceramic unit (7) and to provide heat insulation between the heat receiving pipe (1) to be located at it's center and the glass tubes (2); silicon units (4) in order to provide vacuum seal around the glass tube (2) and to provide enough flexibility to protect the glass tube (2) from vibrations and bending forces that may occur on the metal parts; a heat and UV protection unit (3) in order to provide UV light and heat insulation for the silicon unit (4); and a stationary metal support unit (18) to provide the base for all the glass tube connection units wherein; the entire glass tube connector system (E) is installed as follows; stationary metal support unit (18) is slid on to the heat receiving pipe (1), ceramic unit (7) is slid over the heat receiving pipe (1) and fitted within the stationary metal support unit (18), vacuum sealing gaskets (25) are fit on the bolts (19) on both sides of the metal support unit (18), metal rings (26) are fit on the bolts (19) on both sides of the metal support unit (18), glass tubes (2) previously fitted into silicone units (4) are slid in to position from both sides, metal rings (27) are slid on the silicon unit (4) to press on it to provide vacuum seal, the entire unit is tightened up with bolts (28), the whole assembly is set on the bottom half (6) of the rotating support and housing unit (21), the top half (5) of the rotating support and housing unit (21) is lowered and tightened up..

2. A solar trough field system according to Claim 1 wherein; the ceramic unit (7) consists of two hollow cylindrical halves (8); on one side of each half (8), there exits a number of ball sockets (9); balls (11) are housed in between the two halves of ceramic unit (7), within these ball sockets (9), forming a type of "ball bearing"; these two halves (8) of ceramic unit (7) are glued together, making sure that the glue does not get close to the balls (11), after the balls (11) are placed in between them (8); in addition to glue, the ceramic halves (8) are also bolted (10) together for additional strength.

3. A solar trough field system according to Claim 2 wherein, said balls (11) are made up of ceramic.

4. A solar trough field system according to Claim 1 wherein; the silicon unit (4) is in the shape of a hollow cylinder, wherein the back face (12) of this hollow cylinder extends with a larger diameter in order to provide a flange like shape (15); on the front face (13) of the silicon unit (4), there exists a circular groove (16); the outer lip (14) of the silicon unit (4) is kept thin to increase its flexibility.

5. A solar trough field system according to Claim 1 wherein; the heat and UV protection unit (3) is a flexible insulator unit, used to slide in and cover the inner face of the silicon unit (4).

6. A solar trough field system according to Claim 1 or Claim 4 wherein: the heat and UV protection unit (3) has a hollow cylindrical shape, the back face (17) of this hollow cylinder extends with a larger diameter in order to cover the front face (13) of the silicon unit (4).

7. A solar trough field system according to Claim 1, Claim 4 or Claim 5 wherein, the heat and UV protection unit (3) is made up of ceramic wool.

8. A solar trough field system according to Claim 1 wherein, the base of the metal support unit (18) is a circular ring, with its outer lips forming a cylindrical u-ring (20), bolts (19) to which gaskets, metal rings and silicon pieces will be fitted are welded to the metal piece of this metal support unit (18) to eliminate nuts inside the u-ring (20) where there will be alignment wheels and/or alignment balls.

9. A solar trough field system according to Claim 1 wherein; the rotating support and housing unit (21) comprises assembly of alignment balls (or wheels) (23) which provide multi directional guide for this rotating support (21) and housing unit to glide around the glass tube connection system (E); hinge (22) to allow the top half of this support unit (21) to open while the glass tubes (2) are installed and with the help of this hinge (22), after the glass tube (2) installation is completed, the top half of this support unit (21) is closed and fixed to the bottom half; a connector (23) to the support leg that is attached to the parabolic trough.

10. A solar trough field system according to Claim 9 wherein; after the last glass tube glass tube connector system (E) is placed, the flexible expansion unit (29) is attached to the support unit (18) same as if another glass tube (2) assembly is being fit on.

11. A solar trough field system according to Claim 1 wherein; connection of the expansion unit (29) to the heat receiving pipe (1) comprises the following steps: screwed nipples (32) are welded to the pipes (1); screwed flanges (33) are fitted on to the screwed nipples (32); flexible rings (34) are trapped in between the inner lips of the flanges (33) and the wall thickness of the screwed nipples, a silicone ring (35) is fitted over the flange (33), metal rings (37) are used to tighten the flexible gaskets (36), bolts (38) are tightened to fix the entire assembly and a gasket (36) is used around the bolts (38) to provide vacuum seal.

12. A solar trough field system according to Claim 1 wherein; after the last glass tube (2) and expansion unit (48) of the previous parabolic trough, the heat receiving pipe (1) passes trough a sliding anchor (49) and after forming a vertical loop (52) it reaches a fixed anchor (50) located at the inlet side of the next parabolic trough.

13. A solar trough field system according to Claim 1 wherein, the system also includes a 2m high wind breaker (53) to surround the solar trough field to deflect the wind (55) above the parabolic troughs (54).

14. A solar trough field system according to Claim 1 wherein, an additional glass tube (58) is assembled at the discharge side of the system.

15. A solar trough field system according to Claim 1 wherein, in order to allow the easy movement parabolic reflectors (62) and good resistance against wind loads, the system comprises a rotating structure (61) that is rested on many wheels (66) positioned on a half circular stationary structure (65).

16. A solar trough field system according to Claim 14 wherein, the rotating structure (61) is supporting the parabolic mirror panel (62), by pulling the ropes (64) which ropes (64) are pulled by a central motor with adjustable speed.

17. A solar trough field system according to Claim 15 wherein, the speed of the central motor is adjusted by solar sensors.

## Patentansprüche

1. Solarrinnenfeldsystem, umfassend mehrere Parabolreflektoren, ein Wärmeauffangrohr, dessen Achse mit dem Fokus der Parabolreflektoren zusammenfällt und das aus Glasrohren (2) und einem metallenen Wärmeauffagrohr (1), die ineinander gesteckt sind, besteht, wobei ermöglicht wird, dass sich das metallene Wärmeauffangrohr (1) ausdehnt und sich innerhalb der und unabhängig von den Glasrohren (2) bewegt, um eine Vakuumdichtung vorzusehen, ein Lager für das gesamte Wärmeauffangelement (D) zu schaffen und eine kontinuierliche Vakuumkammer über die gesamte Länge der parabolischen Rinneneinheit zu schaffen, wobei ein Vakuumdichtungs- und Glasrohrverbindungssystem (E) die Glasrohre (2) und das thermische Wärmeauffangrohr (1) miteinander verbindet, um das thermische Auffangrohr (1) stationär zu halten, während das Parabolelement darum rotiert, wobei eine Rotationsstützeinheit (21) die Parabolplatte mit dem Glasrohrverbindungssystem (E) verbindet, um eine Vakuumdichtung zu schaffen, während sich das Wärmeauffangrohr (1) aufgrund von Wärmeexpansion bewegt, wobei flexible Expansionseinheiten (29) an dem Ende jeder Parabolrinneneinheit angeordnet sind, um zu verhindern, dass nicht verdampftes, verbleibendes Wasser durch andere Kollektoren geleitet wird und um den Wärmexpansionsfaktor für das Wärmeauffangrohr (1) zu schaffen, wobei vertikale Schleifen (52) zwischen aufeinanderfolgenden, in Reihe geschalteten Parabolrinnen an der Auslassseite der Paraboleinheit angeordnet sind, wobei das Vakuumdichtungs- und Glasrohrverbindungssystem (E) umfasst eine Keramikeinheit (7), um zu ermöglichen, dass das Wärmeauffangrohr (1) expandiert und über Kugeln (11), die im Zentrum der Keramikeinheit (7) angeordnet sind, frei gleitet, und um eine Wärmeisolation zwischen dem in seinem Zentrum anzuordnenden Wärmeauffangrohr (1) und den Glasrohren (2) zu schaffen, Siliziumeinheiten (4), um eine Vakuumdichtung um das Glasrohr (2) zu schaffen und um genügend Flexibilität zu schaffen, um das Glasrohr (2) vor Vibrationen und Biegekräften, die an den Metallteilen auftreten können, zu schützen, eine Wärme und UV-Schutzeinheit (3), um für die Siliziumeinheit (4) eine UV-Licht- und Wärmeisolierung zu schaffen, und eine stationäre Metallstutzeinheit (18), um eine Basis für sämtliche
Glasrohrverbindungseinheiten zu schaffen, wobei das gesamte Glasrohrverbindungssystem (E) wie folgt installiert ist: die stationäre Metallstützeinheit (18) ist auf das Wärmeauffangrohr (1) aufgeschoben, die Keramikeinheit (7) ist auf das Wärmeauffangrohr (1) aufgeschoben und in die stationäre Metallstützeinheit (18) eingepasst, Vakuumdichtringe (25) sind auf den Bolzen (19) an beiden Seiten der metallenen Stützeinheit (18) angebracht. Metallringe (26) sind an den Bolzen (19) auf beiden Seiten der metallenen Stützeinheit (18) angebracht, zuvor in Silikoneinheiten (4) angebrachte Glasrohre (2) sind von beiden Seiten auf Position eingeschoben, Metallringe (27) sind auf die Silikoneinheit (4) aufgeschoben, um darauf zu pressen um eine Vakuumdichtung zu schaffen, die gesamte Einheit ist mit Bolzen (28) gespannt, die gesamte Einheit ist auf die untere Hälfte (6) der Rotationsstütz - und Gehäuseeinheit (21) aufgesetzt, die obere Hälfte (5) der Rotationsstütz - und Gehäuseeinheit (21) ist abgesenkt und festgespannt.

2. Solarrinnenfeldsystem nach Anspruch 1, wobei die Keramikeinheit (7) aus zwei hohlen, zylinderförmigen Hälften (8) besteht, an einer Seite jeder Hälfte (8) eine Anzahl von Kugelbuchsen (9) existiert, Kugeln (11) zwischen den beiden Hälften der Keramikeinheit (7) innerhalb dieser Kugelbuchsen (9) aufgenommen sind und eine Art "Kugellager" ausbilden, wobei die beiden Hälften der Keramikeinheit (7) miteinander verklebt sind, wobei sichergestellt ist, dass der Kleber nicht nahe an die Kugeln (11) gelangt, nachdem die Kugeln (11) zwischen den Hälften (8) angeordnet sind, und wobei zusätzlich zum Kleben die Keramikhälften (8) außerdem für zusätzliche Stabilität verschraubt (10) sind.

3. Solarrinnenfeldsystem nach Anspruch 2, wobei die Kugeln (11) aus Keramik bestehen.

4. Solarrinnenfeldsystem nach Anspruch 1, wobei die Silikoneinheit (4) die Gestalt eines hohlen Zylinders besitzt, wobei die Rückseite (12) dieses hohlen Zylinders einen großen Durchmesser aufweist, um eine flanschartige Gestalt (15) auszubilden, wobei an der Vorderseite (13) der Silikoneinheit (4) eine ringförmige Nut (16) existiert und die äußere Lippe (14) der Silikoneinheit (4) dünngehaften ist, um ihre Flexibilität zu steigern.

5. Solarrinnenfeldsystem nach Anspruch 1, wobei die Wärme- und UV-Schutzeinheit (3) eine flexible Isolationseinheit ist, genutzt um in die Silikoneinheit (4) eingeschoben zu sein und deren Innenseite abzudecken.

6. Solarrinnenfeldsystem nach Anspruch 1 oder Anspruch 4, wobei die Wärme - und UV- Schutzeinheit (3) eine hohlzylinderförmige Gestalt aufweist und die Rückseite (17) dieses Hohlzylinders einen größeren Durchmesser aufweist, um die Vorderseite (13) der Silikoneinheit (4) abzudecken.

7. Solarrinnenfeldsystem nach Anspruch 1, Anspruch 4 oder Anspruch 5, wobei die Wärme- und UV-Schutzeinheit (3) aus Keramikwolle besteht.

8. Solarrinnenfeldsystem nach Anspruch 1, wobei die Basis der Metallstützeinheit (18) ein runder Ring ist, dessen äußere Lippen einen zylinderförmigen U-Ring (20) ausbilden, wobei Bolzen (19), an denen Dichtrichtige, Metallringe und Silikonstücke angebracht sind, mit dem Metallstück der Metallstützeinheit (18) verschweißt sind, um Muttern im Inneren des u-Rings (20) zu eliminieren, wo Ausrichtungsrädern und/oder Ausrichtungskugeln vorliegen.

9. Solarrinnenfeldsystem nach Anspruch 1, wobei die Rotationsstütz- und Gehäuseeinheit (21) umfasst eine Einheit aus Ausrichtungskugeln (oder Rädern) (23), die eine Mehrrichtungsführung für diese Rotationsstütz- und Gehäuseeinheit (21) ausbilden, um um das Glasrohrverbindungssystem (E) herum zu gleiten, ein Scharnier (22), um ein Öffnen der oberen Hälfte der Stützeinheit (21) zu ermöglichen, während die Glasrohre (2) eingebaut werden und wobei mit Hilfe dieses Scharniers (22) nach vollständigem Einbau des Glasrohres die obere Hälfte der Stützeinheit (21) geschlossen und an der unteren Hälfte befestigt wird, und ein Verbindungsmittel (23) mit dem Stützbein, das an der Parabolrinne befestigt ist.

10. Solarrinnenfeldsystem nach Anspruch 9, wobei, nachdem das letzte Glasrohrverbindungssystem (E) angeordnet ist, die flexible Expansionseinheit (29) an der Stützeinheit (18) befestigt ist, so als wenn eine andere Glasrohreinheit (2) daran befestigt wäre.

11. Solarrinnenfeldsystem nach Anspruch 1, wobei die Verbindung der Expansionseinheit (29) mit dem Wärmeauffangrohr (1) die folgenden Schritte umfasst: Gewindestutzen (32) werden an die Rohre (1) geschweißt, Gewindeflansche (33) werden an den Gewindestutzen (32) befestigt, flexible Ringe (34) werden zwischen den Innenlippen der Flansche (33) und der Wandstärke der Gewindestutzen eingeklemmt, ein Siliziumring (35) wird über dem Flansch (33) angebracht, Metallringe (37) werden genutzt, um die flexiblen Dichtscheiben (36) zu befestigen, Bolzen (38) werden angezogen, um die gesamte Einheit zu befestigen, und ein Dichtring (36) wird um die Bolzen (38) herum verwendet, um eine Vakuumdichtung zu schaffen.

12. Solarrinnenfeldsystem nach Anspruch 1, wobei nach dem letzten Glasrohr (2) und der Expansionseinheit (48) der vorhergehenden Parabolrinne das Wärmeauffangrohr (1) durch einen Gleitanker (49) hindurch geleitet ist und nach Ausbilden einer vertikalen Schleife (52) einen festen Anker (50) erreicht, der an der Einlassseite der nächsten Parabolrinne angeordnet ist.

13. Solarrinnenfeldsystem nach Anspruch 1, wobei das System außerdem einen zwei Meter hohen Windbrecher (53) beinhaltet, der das Solarrinnenfeld umgibt, um den Wind (55) über die Parabolrinnen (54) abzulenken.

14. Solarrinnenfeldsystem nach Anspruch 1, wobei ein zusätzliches Glasrohr (58) an der Auslassseite des Systems montiert ist.

15. Solarrinnenfeldsystem nach Anspruch 1, wobei, um eine einfache Bewegung der Parabolreflektoren (62) und eine gute Widerstandsfähigkeit gegenüber Windlasten zu ermöglichen, das System eine Rotationsstruktur (61) umfasst, die auf zahlreichen Rädern (66) ruht, die in einer halbkreisförmigen stationären Struktur (65) positioniert sind.

16. Solarrinnenfeldsystem nach Anspruch 14, wobei die Rotationsstruktur (61) das Parabolspiegelpanel (62) durch Ziehen der Seile (64) stützt, welche Seile (64) durch einen zentralen Motor mit einstellbarer Geschwindigkeit gezogen werden

17. Solarrinnenfeldsystem nach Anspruch 15, wobei die Geschwindigkeit des zentralen Motors durch Solarsensoren eingestellt wird.

## Revendications

1. Système de champ de miroirs cylindro-paraboliques, comprenant de multiples réflecteurs paraboliques ; un tube de récepteur thermique, dont le centre coïncide avec le foyer des réflecteurs paraboliques et qui consiste en un tuyau métallique de réception de chaleur (1) et des tubes en verre (2) qui sont emboîtés, dans lequel pour permettre au tuyau métallique de réception de chaleur (1) de se dilater et de se déplacer librement à l'intérieur et indépendamment des tubes en verre (2), pour fournir un joint d'étanchéité au vide, pour créer un support pour l'élément récepteur de chaleur (D) entier, et pour créer une chambre à vide continue sur la longueur totale de l'unité de miroirs cylindro-paraboliques, un système de raccord de joint d'étanchéité au vide et de tube en verre (E) raccorde les tubes en verre (2) et le tuyau de réception de chaleur thermique (1) l'un à l'autre ; pour permettre que le tube récepteur thermique (1) reste stationnaire pendant que le panneau parabolique est en rotation autour de ce dernier, une unité de support rotative (21) raccorde le panneau parabolique au système de raccord de tube en verre (E) : pour créer un joint d'étanchéité au vide pendant que le tuyau de réception de chaleur (1) se déplace en raison d'une dilatation thermique, des unités de dilatation flexibles (29) sont situées à l'extrémité de chaque unité de miroirs cylindro-paraboliques ; et pour empêcher l'eau restante non évaporée de passer à travers d'autres collecteurs et pour créer le facteur de dilatation thermique pour le tuyau de réception de chaleur (1), des boucles verticales (52) sont placées entre des miroirs cylindro-paraboliques successives raccordées en série, situées du côté évacuation de l'unité parabolique,
dans lequel le système de raccord de joint d'étanchéité au vide et de tube en verre (E) comprend une unité en céramique (7) pour permettre au tuyau de réception de chaleur (1) de se dilater et de glisser librement sur des billes (11) situées au centre de l'unité en céramique (7) et pour permettre une isolation thermique entre le tuyau de réception de chaleur (1) devant être situé en son centre et les tubes en verre (2) ; des unités en silicium (4) pour créer un joint d'étanchéité au vide autour du tube en verre (2) et pour conférer assez de flexibilité pour protéger le tube en verre (2) des vibrations et des forces de flexion qui peuvent se produire sur les parties métalliques ; une unité de protection contre la chaleur et les UV (3) pour conférer une isolation de la lumière UV et de la chaleur pour l'unité en silicium (4) ; et une unité de support métallique stationnaire (18) pour créer la base pour toutes les unités de raccord de tube en verre ; où le système de raccord de tube en verre (E) entier est installé comme suit ; une unité de support métallique stationnaire (18) est enfilée sur le tuyau de réception de chaleur (1), l'unité en céramique (7) est enfilée sur le tuyau de réception de chaleur (1) et ajustée à l'intérieur de l'unité de support métallique stationnaire (18), des joints d'étanchéité au vide (25) sont ajustés sur les boulons (19) des deux côtés de l'unité de support métallique (18),
des bagues métalliques (26) sont ajustées sur les boulons (19) des deux côtés de l'unité de support métallique (18), des tubes en verre (2) précédemment ajustés dans des unités en silicium (4) sont enfilées en position depuis les deux côtés, des bagues métalliques (27) sont enfilées sur l'unité en silicium (4) afin d'appuyer sur cette dernière pour créer un joint d'étanchéité au vide, l'unité entière est serrée avec des boulons (28), l'ensemble complet est installé sur la moitié inférieure (6) du support rotatif et de l'unité de logement (21), la moitié supérieure (5) du support de rotation et de l'unité de logement (21) est abaissée et serrée.

2. Système de champ de miroirs cylindro-paraboliques selon la revendication 1, dans lequel l'unité en céramique (7) consiste en deux moitiés cylindriques creuses (8) ; sur un côté de chaque moitié (8), il y a un certain nombre joints à rotule (9) ; des billes (11) sont logées entre les deux moitiés de l'unité en céramique (7), à l'intérieur de ces joints à rotule (9) formant un type de « roulement à billes » ; ces deux moitiés (8) d'unité en céramique (7) sont collées ensemble, en s'assurant que la colle ne s'approche pas des billes (11), après que les billes (11) sont placées entre ces dernière (8) ; en plus de la colle, les moitiés en céramique (8) sont également maintenues ensemble (10) par des boulons pour plus de solidité.

3. Système de champ de miroirs cylindro-paraboliques selon la revendication 2, dans lequel lesdites billes (11) sont constituées de céramique.

4. Système de champ de miroirs cylindro-paraboliques selon la revendication 1, dans lequel l'unité en silicium (4) est sous la forme d'un cylindre creux, dans lequel la face arrière (12) de ce cylindre creux s'étend avec un diamètre plus grand afin de créer une forme de type bride (15) ; sur la face avant (13) de l'unité en silicium (4), il existe une rainure circulaire (16) ; la lèvre externe (14) de l'unité en silicium (4) est maintenue fine afin d'augmenter sa flexibilité.

5. Système de champ de miroirs cylindro-paraboliques selon la revendication 1, dans lequel l'unité de protection contre la chaleur et les UV (3) est une unité isolante flexible, utilisée pour s'enfiler dans et couvrir la face interne de l'unité en silicium (4).

6. Système de champ de miroirs cylindro-paraboliques selon la revendication 1 ou la revendication 4, dans lequel l'unité de protection contre la chaleur et les UV (3) a une forme cylindrique creuse, la face arrière (17) de ce cylindre creux s'étend avec un diamètre plus grand afin de couvrir la face avant (13) de l'unité de silicium (4).

7. Système de champ de miroirs cylindro-paraboliques selon la revendication 1, la revendication 4 ou la revendication 5, dans lequel l'unité de protection contre la chaleur et les UV (3) est constituée de laine céramique.

8. Système de champ de miroirs cylindro-paraboliques selon la revendication 1, dans lequel la base de l'unité de support métallique (18) est une bague circulaire, avec ses lèvres externes formant une bague en forme de U cylindrique (20), des boulons (19) auxquels des joints d'étanchéité, des bagues métalliques et des pièces en silicium seront fixées sont soudés à la pièce métallique sur cette unité de support métallique (18) afin d'éliminer les écrous à l'intérieur de la bague en forme de U (20) où il y aura des roues d'alignement et/ou des billes d'alignement.

9. Système de champ de miroirs cylindro-paraboliques selon la revendication 1, dans lequel le support rotatif et l'unité de logement (21) comprennent un ensemble des billes (ou de roues) d'alignement (23) qui créent un guide multidirectionnel pour ce support rotatif (21) et une unité de logement pour glisser autour du système de raccord de tube en verre (E); une charnière (22) pour permettre à la moitié supérieure de cette unité de support (21) de s'ouvrir alors que les tubes en verre (2) sont installés et à l'aide de cette charnière (22) après que l'installation du tube en verre (2) est terminée, la moitié supérieure de cette unité de support (21) est fermée et fixée à la moitié inférieure ; un raccord (23) à la jambe de support qui est attaché au miroir cylindro-parabolique.

10. Système de champ de miroirs cylindro-paraboliques selon la revendication 9, dans lequel après que le système de raccord de tube en verre (E) est placé, l'unité de dilatation flexible (29) est attachée à l'unité de support (18) de même que si un autre ensemble de tube en verre (2) était ajusté dessus.

11. Système de champ de miroirs cylindro-paraboliques selon la revendication 1, dans lequel le raccord de l'unité de dilatation (29) au tuyau de réception de chaleur (1) comprend les étapes suivantes : des mamelons vissés (32) sont soudés aux tuyaux (1) ; des brides vissées (33) sont ajustées sur les mamelons vissés (32) ; des bagues flexibles (34) sont emprisonnées entre les lèvres internes des brides (33) et l'épaisseur de paroi des mamelons vissés, une bague en silicone (35) est ajustée sur la bride (33), des bagues métalliques (37) sont utilisées pour serrer les joints d'étanchéité flexibles (36), des boulons (38) sont serrés pour fixer l'ensemble entier et un joint d'étanchéité (36) est utilisé autour des boulons (38) pour créer un joint d'étanchéité au vide.

12. Système de champ de miroirs cylindro-paraboliques selon la revendication 1, dans lequel après le dernier tube en verre (2) et unité de dilatation (48) du miroir cylindro-parabolique précédent, le tuyau de réception de chaleur (1) passe à travers une ancre coulissante (49) et après la formation d'une boucle verticale (52), il atteint une ancre fixe (50) située au niveau du côté d'admission du miroir cylindro-parabolique suivant.

13. Système de champ de miroirs cylindro-paraboliques selon la revendication 1, dans lequel le système comprend également un coupe-vent (53) de 2 m de haut pour entourer le champs de miroirs cylindro-paraboliques afin de faire dévier le vent (55) au-dessus des miroirs cylindro-paraboliques (54),

14. Système de champ de miroirs cylindro-paraboliques selon la revendication 1, dans lequel un tube en verre supplémentaire (58) est assemblé du côté évacuation du système.

15. Système de champ de miroirs cylindro-paraboliques selon la revendication 1, dans lequel, pour permettre un mouvement facile des réflecteurs paraboliques (62) et une bonne résistance contre les charges de vent, le système comprend une structure rotative (61) qui repose sur de nombreuses roues (66) positionnées sur une structure stationnaire semi-circulaire (65).

16. Système de champ de miroirs cylindro-paraboliques selon la revendication 14, dans lequel la structure rotative (61) supporte le panneau de miroir parabolique (62) en tirant les cordes (64), lesquelles cordes (64) sont tirées par un moteur central à vitesse ajustable.

17. Système de champ de miroirs cylindro-paraboliques selon la revendication 15.
dans lequel la vitesse du moteur central est ajustée par des capteurs solaires.
